# EUROPEAN PATENT SPECIFICATION

(11) **EP 4 123 146 B1**
(45) Date of publication and mention of the grant of the patent: **13.11.2024**
(21) Application number: 22186554.6
(22) Date of filing: 22.07.2022
(51) Int. Cl.: F02C 3/22, F02C 7/18, F02C 9/18

(54) **DUAL CYCLE INTERCOOLED ENGINE ARCHITECTURES**
ZWEITAKT-MOTOR MIT ZWISCHENKÜHLUNGSARCHITEKTUREN
ARCHITECTURES DE MOTEUR REFROIDI À DOUBLE CYCLE

(30) Priority: 22.07.2021 US 202117383120
(43) Date of publication of application: 25.01.2023
(73) Proprietor: PRATT & WHITNEY CANADA CORP., Longueuil, Québec J4G 1A1 (CA)
(72) Inventor: SMITH, Scott, St. Lambert, J4P 1J5 (CA)
(74) Representative: Dehns

(56) References cited:
- US-A1- 2016 123 226
- US-A1- 2019 218 971
- US-B2- 11 047 307

## Description

### TECHNICAL FIELD

The present disclosure relates generally to gas turbine engines, and more particularly to gas turbine engines with intercooling. There is always a need in the art for improvements to engine architecture in the aerospace industry.

### BACKGROUND

A prior art gas turbine engine having the features of the preamble of claim 1 is disclosed in US 2019/218971 A1.

### SUMMARY

In one aspect of the present disclosure, there is provided a gas turbine engine in accordance with claim 1.

In another aspect of the present disclosure, there is provided a method of operating a gas turbine engine in accordance with claim 12.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an embodiment of an aircraft in accordance with this disclosure;
Fig. 2 is a schematic diagram of an embodiment of a gas turbine engine constructed in accordance with the present disclosure, showing a dual cycle intercooled engine architecture; and
Fig. 3 is a schematic diagram of another embodiment of a gas turbine engine constructed in accordance with the present disclosure, showing another dual cycle intercooled engine architecture.

### DETAILED DESCRIPTION

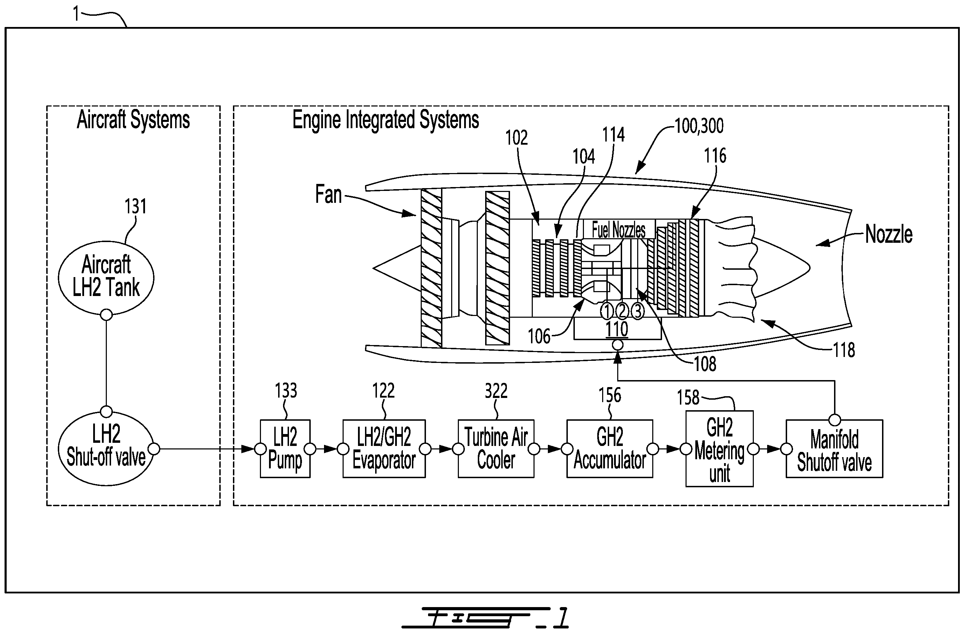

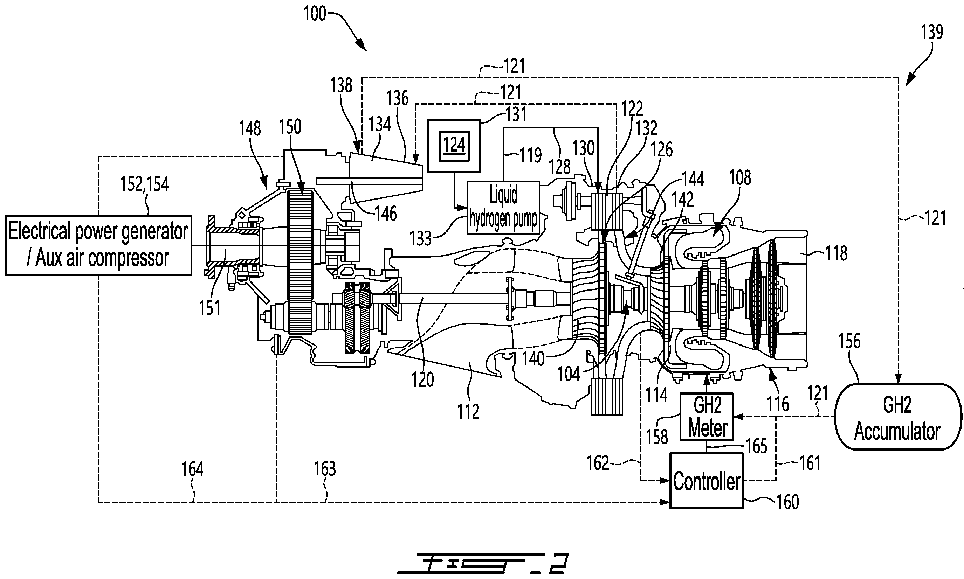

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments and/or aspects of this disclosure are shown in Figs. 2-3. The systems and methods described herein can be used to improve engine efficiency, reduce carbon emissions, and improve power to weight ratio.

Traditionally, hydrocarbon fuels are used to power gas turbine engines, however, it is possible to use a variety of fuels for the combustion portion of the Brayton Cycle, for example pure hydrogen, non-hydrocarbon fuels, or mixes. When hydrogen is used as the fuel, it is possible to operate the gas turbine engine with little or no pollutants in the exhaust. Moreover, various means of intercooling/evaporating are also possible when using hydrogen fuel, as described and contemplated herein. As a non-limiting example, such means of intercooling/evaporating may include in-situ pre-coolers in the engine inlet or axial intercoolers between axial compressors.

In certain embodiments, referring to Fig. 1, an aircraft 1 can include an engine 100, where the engine can be a propulsive energy engine (e.g. creating thrust for the aircraft 1), or a non-propulsive energy engine, and a fuel system 100. As described herein, the engine 100 is a turbofan engine, although the present technology may likewise be used with other engine types. The engine 100 includes a compressor section 102 having a compressor 104 in a primary gas path 106 to supply compressed air to a combustor 108 of the aircraft engine 100, the primary gas path 106 including fluidly in series the combustor 108 and nozzle manifold 110 for issuing fluid to the combustor 108.

With reference now to Fig.2, the primary gas path 106 includes, in fluid series communication: an air inlet 112, the compressor 104 fluidly connected to the air inlet 112, the combustor 108 fluidly connected to an outlet 114 of the compressor 104, and a turbine section 116 fluidly connected to an outlet 118 of the combustor 108, the turbine section 116 mechanically connected to the compressor 104 to drive the compressor 104.

A main output shaft 120 is operatively connected to the turbine section 116 to be driven by the turbine section 116. A heat exchanger 122 is fluidly connected between a liquid hydrogen supply 124 and the compressor 104. An air conduit 126 is fluidly connected to the primary gas path 106.A fluid conduit 128, carrying liquid hydrogen from the liquid hydrogen supply 124, is in thermal communication with the air conduit 126 within the heat exchanger 122, but is fluidly isolated from the air conduit 126.

The fluid conduit 128 has a liquid hydrogen inlet 130 and a gaseous hydrogen outlet 132 fluidly connected to the liquid hydrogen inlet 130. A liquid hydrogen pump 133 is fluidly connected to the liquid hydrogen inlet 130 of the heat exchanger 122 and operable to supply liquid hydrogen to the liquid hydrogen inlet 130. It is contemplated that any suitable liquid hydrogen supply can be used, for example, the liquid hydrogen can be pumped from aircraft cryogenic tanks 131 using the liquid hydrogen pump 133 mounted on an accessory pad (e.g. on an engine accessory gearbox), or the pump 133 may be driven externally by other means.

An expansion turbine 134 having a gas inlet 136 is fluidly connected to the gaseous hydrogen outlet 132 and a gas outlet 138 fluidly connected to the gas inlet 136, where the gas outlet 138 of the expansion turbine 134 is fluidly connected to the combustor 108 via conduit 139.

In certain embodiments, the compressor 104 includes a first stage (e.g. low pressure) compressor 140 and a second stage (e.g. high pressure) compressor 142. The second stage compressor 142 is in fluid communication with the first stage compressor 140 through an inter-stage duct 144. The heat exchanger 122 is fluidly connected to the primary gas path 106 between the adjacent first and second stage compressors 140, 142 such that the inter-stage duct 144 forms a compressor air conduit through the heat exchanger 122. For example, hot compressed air from the first stage compressor 140 passes through conduit 126 to the second stage compressor 142, where heat is exchanged in the heat exchanger 122 so that liquid hydrogen in the fluid conduit 128 is evaporated to gaseous hydrogen. This heat exchange serves the dual purpose of converting the liquid hydrogen 119 to gaseous hydrogen 121 to be used as fuel in the combustor 108, and while also cooling the air inlet 112 of the compressor 104, improving engine efficiency. The hydrogen (119, 121) and compressor air are in fluid isolation from each other throughout their respective passages (conduits 126, 138) in the heat exchanger 122 to avoid mixing of air and hydrogen in the heat exchanger 122, but are in thermal communication with one another for heat exchange between the hydrogen and compressor air in the heat exchanger 122.

The hydrogen expansion turbine 134 is positioned downstream of the heat exchanger 122 and upstream of the combustor 108 relative to hydrogen flow (119, 121). A rotatable element of the expansion turbine 134 (e.g. a turbine shaft 146) is operatively connected to a gearbox 148 (e.g. a reduction gearbox for a propeller, accessory gearbox, or the like) to input additional rotational power to the gearbox 128. More specifically, the expansion turbine shaft 146 is meshed with at least one gear 150 in the gearbox 148 such that when the liquid hydrogen 119 is converted to a gaseous state 121, the power from the expanding gas is extracted through the expansion turbine 134, driving the expansion turbine 134, adding additional rotational power to the gearbox 148. For example, the expansion turbine 134 is operatively connected to the main shaft 120 (e.g. via the gearbox 148 and output shaft 151) to drive the main shaft 120 in parallel with the turbine section 116. In this manner, the main shaft 120 is driven by combined power from the turbine section 116 and the expansion turbine 134. In certain embodiments, the hydrogen expansion turbine 134 can be operatively connected to one or both of an electrical power generator 152 to drive the electrical power generator 152, and an auxiliary air compressor 154 to drive the auxiliary air compressor 154.

A gaseous hydrogen accumulator 156 is disposed in conduit 139 downstream of the heat exchanger 122 relative to hydrogen flow, wherein the gaseous hydrogen accumulator 156 is between the heat exchanger 122 and the combustor 108. A gaseous hydrogen meter 158 is disposed in the conduit 139 downstream of the gaseous hydrogen accumulator 156 relative to hydrogen flow for controlling flow of hydrogen to the combustor 108, the gaseous hydrogen meter 158 being between the accumulator 156 and the combustor 108. After the gaseous hydrogen 121 is evaporated and extracted through the expansion turbine 134, the expanded low pressure gaseous hydrogen 121 is collected and stored in the gaseous hydrogen accumulator 156 and then regulated to a pressure where it can then be metered (e.g. via meter 158) to provide combustor ready hydrogen gas to the combustor 108.

In certain embodiments, a controller 160 is operatively connected to the gaseous hydrogen meter 158 and at least one sensor included in any of the gearbox 148, the hydrogen expansion turbine 134, and/or the turbine section 116. The controller 160 can include machine readable instructions that cause the controller to receive input 145 for a command power, receive input 147 from at least one of the gearbox 128, the hydrogen expansion turbine 134, and/or the turbine section 136, and adjust the flow of gaseous hydrogen 121 via the gaseous hydrogen meter 158 to achieve the command power, based on the input (e.g. signals 161, 162, 163, 164) received by the controller 160. In embodiments, the controller 160 can additionally receive input from a compressor pressure (e.g. P3 pressure, upstream of the accumulator 156) and input from the accumulator 156 downstream of the compressor pressure.

In yet another aspect of the present disclosure, there is provided a method. For example, the controller 160 can include machine readable instruction operable to execute the method. The method includes, supplying liquid hydrogen 119 to a heat exchanger 122 and expanding the liquid hydrogen 119 to gaseous hydrogen 121 with heat supplied to the heat exchanger 122, supplying the heat to the heat exchanger 122 with compressed air from a first stage compressor 140, where expanding the liquid hydrogen 119 to gaseous hydrogen 121 includes cooling the compressed air from the first stage compressor 140, compressing cooled air from the heat exchanger 122, and combusting the gaseous hydrogen 121 with the compressed cooled air in the combustor 108.

In embodiments, the method includes extracting power from a flow of gaseous hydrogen 121 with a hydrogen expansion turbine 134 downstream of the heat exchanger 122. In certain embodiments, the method includes combining power from the expansion turbine 134 with power from a main shaft 120 driven by a turbine section 116 to drive an output shaft 151 for example to generate thrust and/or electrical power. In certain embodiments, the method includes receiving input from at least one of the gearbox 148, the hydrogen expansion turbine 134, and/or the turbine section 116 (e.g. signals 161, 162, 163, 164) and outputting a command 165 to the gaseous hydrogen meter 158 to adjust flow of gaseous hydrogen 121 to the combustor 108 to achieve a command power output at the output shaft 151.

It is contemplated that a dual cycle intercooled architecture as described herein can be retrofit on an existing, conventional gas turbine engine. For example, any or all of a liquid hydrogen supply 124, heat exchanger 122, a gaseous hydrogen accumulator 156, a gaseous hydrogen meter 158, an expansion turbine 134 between the heat exchanger 122 and the gaseous hydrogen accumulator 156, can be introduced in an existing turbine engine. The system can then be connected as follows: connecting the liquid hydrogen supply 124 to the heat exchanger 122 via a liquid hydrogen pump 133 in a first line (e.g. fluid conduit 128), connecting the heat exchanger 122 to the expansion turbine 134 via a second line (e.g. an upstream portion of conduit 139), and connecting the expansion turbine 134 to the combustor via a third line (e.g. a downstream portion of conduit 139), wherein the gaseous hydrogen accumulator 156 and gaseous hydrogen meter 158 are disposed in the third line.

This architecture differs from other intercooled or expansion turbine engines in that it combines several engine improvements by making use of cold liquid hydrogen for cooling and expansion. The methods and systems of the present disclosure, as described above and shown in the drawings, provide for improved engine efficiency through intercooling. Additionally, inclusion of the expansion turbine allows for a smaller engine without sacrificing power output, therefore improving power to weight ratio. Carbon emissions may also be reduced or eliminated. Finally, this arrangement accomplishes these improvements in a compact package which would fit in existing nacelle loft lines (e.g. for a turboprop) therefore minimizing drag.

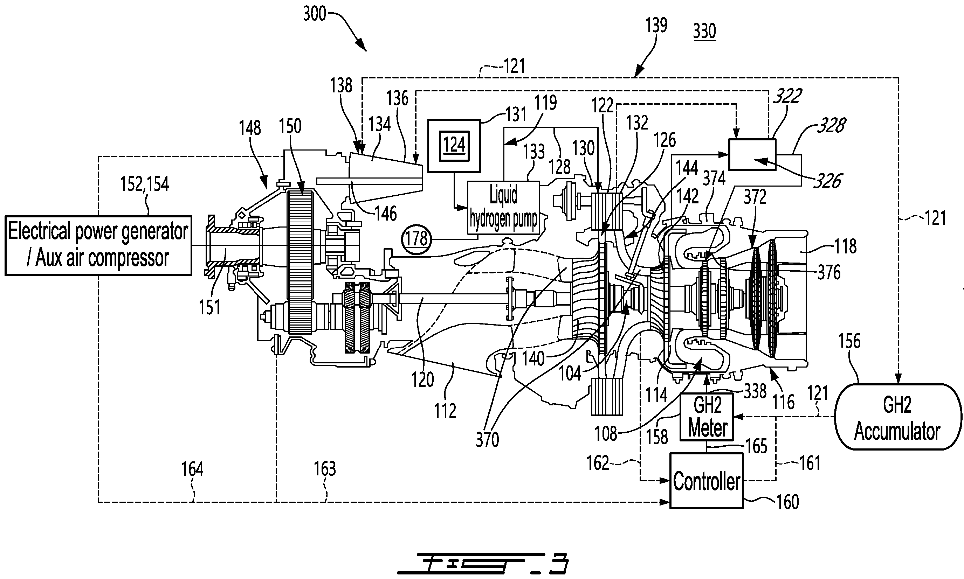

In yet another aspect of the present disclosure, there is provided another gas turbine engine 300. In certain embodiments, for example as provided in Fig. 3, the engine 300 can have similar architecture as in gas turbine engine 100. For brevity, the description of common elements that have been described above are not repeated.

For engine 300, the primary gas path 106 has, in fluid series communication, a primary air inlet 112, a compressor 104 fluidly connected to the primary air inlet 112 via an air conduit 370, a combustor 108 fluidly connected to an outlet 114 of the compressor 104, and a turbine 116 fluidly connected to an outlet 118 of the combustor 108, where the turbine 116 is operatively connected to the compressor 104 to drive the compressor 104. In some embodiments, such as shown in Fig. 3, the turbine section includes a plurality of turbine stages and plurality of compressor stages. It is contemplated that the engine 300 can be a single compressor, single turbine engine, where there is a single stage of each of the compressor 104 and turbine 116. It is also contemplated the engine 300 can include multiple stages of each of the compressor 104 and turbine 116, as shown, where there can be any number and type of stages. For example, as shown the compressor stages 140, 142 as shown are centrifugal, however there may be embodiments in which be one stage may be centrifugal followed by axial stages, embodiments may include all axial stages, for example. Any suitable number and combination of stages is contemplated herein.

In embodiments, the combustor 108 is fluidly connected to the source of hydrogen 124 via the hydrogen conduit 139 defined in part by fluid conduits 128, 328 of upstream and downstream heat exchangers 122, 322. The pump 133 is operable to move hydrogen 119 from the source of hydrogen 124, through the upstream and downstream heat exchangers 122, 322, and ultimately to the combustor 108. In certain embodiments, the source of hydrogen 124 is a source of liquid hydrogen 119 operable to provide a supply of liquid hydrogen 119 to the fluid conduits 128, 328 of the upstream and downstream heat exchangers 122, 322. The pump 133 is a liquid hydrogen pump disposed in the hydrogen conduit 139 at a location that is fluidly upstream of the fluid conduits 128, 328 of the upstream and downstream heat exchangers 122,322. In certain embodiments, the pump 133 can be driven by a power source 178 operatively connected to the pump 133.

The fluid conduit 128 of the upstream heat exchanger 122 is in fluid isolation from an air conduit 126 of upstream first heat exchanger 122 and in thermal communication with the air conduit 126. The fluid conduit 128 extends from the hydrogen inlet 130 to a hydrogen outlet 138, the hydrogen inlet 130 being fluidly connected to the source of hydrogen 124 and the hydrogen outlet 138 being fluidly connected to the fluid conduit 328. The fluid conduit 328 of the downstream heat exchanger 322 is in fluid isolation from an air conduit 326 of the downstream heat exchanger 322 and in thermal communication with the air conduit 326. The fluid conduit 328 extends from the hydrogen inlet 130 to a hydrogen outlet 338 (e.g. the fluid conduit 328 of the downstream heat exchanger 322 is fluidly connected to the source of hydrogen 124 via the fluid conduit 128 of the upstream heat exchanger 122).

For the ease of understanding, and not for the purpose of limitation, the flow of hydrogen will be described as it is moved from the source of hydrogen 124 to the combustor 108. The liquid hydrogen is moved through the hydrogen pump 133 to the fluid conduit 128 of the upstream heat exchanger 122 where it is first expanded to gaseous hydrogen 121. Next, the gaseous hydrogen 121 is moved through to the fluid conduit 328 of the downstream heat exchanger 322 where it is further expanded, and then moved through conduit 139 to the expansion turbine 134. The gaseous hydrogen 121 drives rotation of the expansion turbine 134, and is then moved through the conduit 139 to the accumulator 156, where it is held in the accumulator 156 until its commanded release (e.g. via controller 160) to the combustor 108. The hydrogen 119, 121 is expanded in the upstream and downstream heat exchangers 122, 322 through thermal communication with hot compressor air in the air conduit 370, as described below.

In certain embodiments, the upstream and downstream heat exchangers 122, 322 and the liquid hydrogen pump 133 are sized to convert a majority of the supply of liquid hydrogen 119 into a supply of gaseous hydrogen 121. In certain embodiments, the upstream and downstream heat exchangers 122, 322 and the liquid hydrogen pump 133 are sized to convert 90%-100% of the supply of liquid hydrogen 119 into a supply of gaseous hydrogen 121, by volume. For example, the supply rate (e.g. flow rate) of the pump 133, and the heat transfer rates of the heat exchangers 122, 322 are selected for the particular application and size of engine such that the claimed functionality is provided, where the sizing and/or selection of pump and heat exchanger may be done using conventional engineering principles, for example.

In embodiments, the hydrogen conduit 139 is defined in part by the expansion turbine 134 at a location in the hydrogen conduit 139 that is fluidly downstream of the fluid conduits 128, 328 of the upstream and downstream heat exchangers 122, 322. In embodiments, the hydrogen conduit 139 is defined in part by the gaseous hydrogen accumulator 156 at a location in the hydrogen conduit 139 that is fluidly downstream of the fluid conduits 128, 328 of the upstream and downstream heat exchangers 122, 322 and downstream of the expansion turbine 134.

The primary air inlet 112 of the air conduit 370 is connected in fluid communication with the primary gas path 106 fluidly downstream of at least one compressor stage of the compressor 104 and upstream of the combustor 108. The air outlet 114 is connected to the turbine section 116 for cooling in the turbine section 116 using air from the compressor 104 conveyed through a turbine cooling air conduit 372. As the air passes through the first compressor stage 140, the air is heated, before passing through the air conduit 126 of the upstream heat exchanger 122. This hot compressor air heats the liquid hydrogen 119 in the upstream heat exchanger 122, expanding the hydrogen a given amount. This given amount may be sufficient to power the expansion turbine 134 and may be sufficient for combustion, however, there is still potential for additional expansion. Therefore, as the air passes through the air conduit 370 and further through the compressor stages e.g. stage 142, this further compressed and heated air then moves through the air conduit 326 of the downstream heat exchanger 322, completely or near completely expanding the hydrogen in the fluid conduit to gaseous hydrogen 121. At the same time, the hot compressor air in air conduit 370 and 326 is then cooled by the hydrogen 119, 121 such that the air in the air conduit 126, 326 of the upstream and downstream heat exchangers 122, 322 can be used to cool turbine components (e.g. via turbine cooling air conduit 372).

In this way, turbine cooling air conduit 372 extends from an air inlet 374 of the turbine cooling air conduit to an air outlet 376 of the turbine cooling air conduit 372. The outlet 376 can be the same as compressor outlet 114, or a different outlet than outlet 114. In this configuration, the turbine cooling air conduit 372 is defined in part by the air conduit 326 of the first heat exchanger 322 and the air conduit 370 of the primary gas path 106 is therefore defined in part by the air conduit 126 of the second heat exchanger 122 at a location in the primary gas path that is between adjacent compressor stages of the plurality of compressor stages 140, 142. As shown the air inlet 374 of the turbine cooling air conduit 372 is fluidly downstream of all compressor stages 140, 142.

In yet another aspect of the present disclosure, there is provided a method of operating the engine 300 in the aircraft 1. The method includes heating the flow of gaseous hydrogen 121 in an upstream heat exchanger 122 with compressor discharge air, passing a flow of gaseous hydrogen 121 through a compressor 104 to a downstream heat exchanger 322, downstream of the upstream heat exchanger 122, extracting kinetic energy from the flow of gaseous hydrogen 121 from the downstream heat exchanger 322 to rotate a rotatable component 120 of the aircraft 1. After the extracting, combusting the flow of gaseous hydrogen 121 with the compressor discharge air in a combustor 108 of the gas turbine engine 300 of the aircraft 1, and cooling a turbine section 116 of the gas turbine engine 300 with air from the downstream heat exchanger 322.

In embodiments, the method further includes, expanding a flow of liquid hydrogen 119 to a flow of gaseous hydrogen 121 in the upstream heat exchanger 122 upstream of the downstream heat exchanger 322 relative to hydrogen flow, compressing cooled air from the second heat exchanger 122, where expanding the liquid hydrogen 119 to gaseous hydrogen 121 includes cooling the compressed air from a first compressor stage 140, and supplying heat to the downstream heat exchanger 322 with compressed air from a second compressor stage 142. In embodiments, the method further include using rotation of the rotatable component 120, generating one or both of: thrust, and electrical power.

## Claims

1. A gas turbine engine (300), comprising:
a primary gas path (106) having, in fluid series communication: a primary air inlet (112), a compressor (104) fluidly connected to the primary air inlet (112), a combustor (108) fluidly connected to an outlet (114) of the compressor (104), and a turbine (116) fluidly connected to an outlet (118) of the combustor (108), the turbine (116) operatively connected to the compressor (104) to drive the compressor (104); and
a turbine cooling air conduit (372) extending from an air inlet (374) of the turbine cooling air conduit (372) to an air outlet (376) of the turbine cooling air conduit (372),
the upstream air inlet (374) connected in fluid communication with the primary gas path (106) at a location downstream of the compressor (104) and upstream of a combustion chamber of the combustor (108),
the air outlet (376) connected to the turbine (116) for cooling in the turbine (116) using air from the compressor (104) conveyed through the turbine cooling air path (372); and
wherein the turbine cooling air conduit (372) is defined in part by an air conduit (326) of a heat exchanger (322), the heat exchanger (322) having a fluid conduit (328) in fluid isolation from the air conduit (326) and in thermal communication with the air conduit (326), the fluid conduit (328) extending from a hydrogen inlet (130) of the fluid conduit (328) to a hydrogen outlet (338) of the fluid conduit (328), the hydrogen inlet (130) being fluidly connected to a source of hydrogen (124), the hydrogen outlet (338) being fluidly connected to the combustor (108),
**characterized in that**:
the heat exchanger (322) is a downstream heat exchanger (322) and the primary gas path (106) is defined in part by an air conduit (126) of an upstream heat exchanger (122) at a location in the primary gas path (106) that is between adjacent compressor stages of the plurality of compressor stages (140, 142), the upstream heat exchanger (122) having a fluid conduit (128) in fluid isolation from the air conduit (126) of the upstream heat exchanger (122) and in thermal communication with the air conduit (126) of the upstream heat exchanger (122);
the fluid conduit (328) of the downstream heat exchanger (322) is fluidly connected to the source of hydrogen (124) via the fluid conduit (128) of the upstream heat exchanger (122);
the combustor (108) is fluidly connected to the source of hydrogen (124) via a hydrogen conduit (139) defined in part by the fluid conduits (128, 328) of the upstream and downstream heat exchangers (122, 322) and by a pump (133) operable to move hydrogen (119) from the source of hydrogen (124) to the combustor (108); and
the hydrogen conduit (139) is defined in part by a gaseous hydrogen accumulator (156) at a location in the hydrogen conduit (139) that is fluidly downstream of the fluid conduits (128, 328) of the upstream and downstream heat exchangers (122, 322).

2. The gas turbine engine of claim 1, comprising a compressor section (102) fluidly connected to the primary air inlet (112) and having a plurality of compressor stages (140, 142), and a turbine section fluidly connected to the outlet (118) of the combustor (108) and operatively connected to the compressor section (102) to drive the compressor section (102), the turbine section having a plurality of turbine stages, and wherein:
the compressor (104) is a compressor stage of the plurality of compressor stages (140, 142),
the turbine (116) is a turbine stage of the plurality of turbine stages, and
the air inlet (374) of the turbine cooling air conduit (372) is fluidly downstream of at least one compressor stage of the plurality of compressor stages (140, 142).

3. The engine of claim 2, wherein the air inlet (374) of the turbine cooling air conduit (372) is fluidly downstream of all compressor stages (140, 142) of the plurality of compressor stages (140, 142).

4. The engine of claim 2 or 3, wherein the air outlet (376) of the turbine cooling air path (372) is fluidly upstream of all turbine stages of the plurality of turbine stages.

5. The engine of any preceding claim, wherein:
the source of hydrogen (124) is a source of liquid hydrogen (119) operable to provide a supply of liquid hydrogen (119) to the fluid conduit (128) of the upstream heat exchanger (122); and
the pump (133) is a liquid hydrogen pump disposed in the hydrogen conduit (139) at a location that is fluidly upstream of the fluid conduit (128) of the upstream heat exchanger (122).

6. The engine of claim 5, wherein the upstream and downstream heat exchangers (122, 322) and the liquid hydrogen pump are sized to convert a majority of the supply of liquid hydrogen (119) into a supply of gaseous hydrogen (121), or wherein the upstream and downstream heat exchangers (122, 322) and the liquid hydrogen pump are sized to convert 90%-100% of the supply of liquid hydrogen (119) into a supply of gaseous hydrogen (121), by volume.

7. The engine of any preceding claim, wherein the hydrogen conduit (139) is defined in part by an expansion turbine (134) at a location in the hydrogen conduit (139) that is fluidly downstream of the fluid conduits (128, 328) of the upstream and downstream heat exchangers (122, 322).

8. The engine of claim 7, wherein the expansion turbine (134) is operatively connected to a rotatable component (120, 148, 151) of the gas turbine engine (300) to drive the rotatable component (120, 148, 151).

9. The engine of claim 8, wherein the rotatable component is one of: an output shaft (120, 151), a reduction gearbox (148), and an accessory gearbox (148).

10. The engine of claim 8 or 9, wherein the gas turbine engine (300) comprises a gearbox (148) having an output shaft (151), a rotatable component (146) of the expansion turbine (134) operatively connected to the output shaft (151) to drive the output shaft (151) in parallel with the turbine section, wherein the gear box (148) is operatively connected to a main shaft (120) driven by the turbine section, the output shaft (151) driven by combined power from the turbine section and the expansion turbine (134).

11. The engine of any preceding claim, wherein the gaseous hydrogen accumulator (156) is fluidly downstream of a or the expansion turbine (134) in the hydrogen conduit (139).

12. A method of operating the engine (300) of claim 1 in an aircraft (1), comprising:
heating a flow of gaseous hydrogen (121) in an upstream heat exchanger (122) with compressor discharge air;
passing the flow of gaseous hydrogen (121) through the compressor (104) to the heat exchanger (322), downstream of the upstream heat exchanger (122);
extracting kinetic energy from the flow of gaseous hydrogen (121) from the downstream heat exchanger (322) to rotate a rotatable component (120, 148, 151) of the aircraft (1); and
after the extracting, combusting the flow of gaseous hydrogen (121) with the compressor discharge air in the combustor (108) of the gas turbine engine (300) of the aircraft (1); and
cooling the turbine (116) of the gas turbine engine (300) with air from the downstream heat exchanger (322).

13. The method as recited in claim 12, further comprising:
expanding a flow of liquid hydrogen (119) to a flow of gaseous hydrogen (121) in the upstream heat exchanger (122) upstream of the downstream heat exchanger (322) relative to hydrogen flow;
compressing cooled air from the upstream heat exchanger (122);
wherein expanding the liquid hydrogen (119) to gaseous hydrogen (121) includes cooling the compressed air from a first compressor stage (140); and
supplying heat to the downstream heat exchanger (322) with compressed air from a second compressor stage (142).

14. The method of claim 12 or 13, further comprising, using rotation of the rotatable component (120, 148, 151), generating one or both of: thrust, and electrical power.

## Patentansprüche

1. Gasturbinentriebwerk (300), umfassend:
einen primären Gaspfad (106), der in serieller Fluidverbindung Folgendes aufweist: einen primären Lufteinlass (112), einen Kompressor (104), der fluidisch mit dem primären Lufteinlass (112) verbunden ist, einen Brenner (108), der fluidisch mit einem Auslass (114) des Kompressors (104) verbunden ist, und eine Turbine (116), die fluidisch mit einem Auslass (118) des Brenners (108) verbunden ist, wobei die Turbine (116) zum Antreiben des Kompressors (104) mit dem Kompressor (104) wirkverbunden ist; und
eine Turbinenkühlluftleitung (372), die sich von einem Lufteinlass (374) der Turbinenkühlluftleitung (372) zu einem Luftauslass (376) der Turbinenkühlluftleitung (372) erstreckt, wobei der stromaufwärtige Lufteinlass (374) an einer Stelle stromabwärts des Kompressors (104) und stromaufwärts einer Brennkammer des Brenners (108) in Fluidverbindung mit dem primären Gaspfad (106) verbunden ist,
wobei der Luftauslass (376) zum Kühlen der Turbine (116) unter Verwendung von durch den Turbinenkühlluftpfad (372) geleiteter Luft aus dem Kompressor (104) mit der Turbine (116) verbunden ist; und
wobei die Turbinenkühlluftleitung (372) teilweise durch eine Luftleitung (326) eines Wärmetauschers (322) definiert ist, wobei der Wärmetauscher (322) eine Fluidleitung (328) aufweist, die fluidisch von der Luftleitung (326) isoliert ist und in thermischer Verbindung mit der Luftleitung (326) steht, wobei sich die Fluidleitung (328) von einem Wasserstoffeinlass (130) der Fluidleitung (328) zu einem Wasserstoffauslass (338) der Fluidleitung (328) erstreckt, wobei der Wasserstoffeinlass (130) fluidisch mit einer Wasserstoffquelle (124) verbunden ist, wobei der Wasserstoffauslass (338) fluidisch mit dem Brenner (108) verbunden ist,
**dadurch gekennzeichnet, dass**:
der Wärmetauscher (322) ein stromabwärtiger Wärmetauscher (322) ist und der primäre Gaspfad (106) an einer Stelle in dem primären Gaspfad (106), die sich zwischen benachbarten Kompressorstufen der Vielzahl von Kompressorstufen (140, 142) befindet, teilweise durch eine Luftleitung (126) eines stromaufwärtigen Wärmetauschers (122) definiert ist, wobei der stromaufwärtige Wärmetauscher (122) eine Fluidleitung (128) aufweist, die fluidisch von der Luftleitung (126) des stromaufwärtigen Wärmetauschers (122) isoliert ist und in thermischer Verbindung mit der Luftleitung (126) des stromaufwärtigen Wärmetauschers (122) steht;
die Fluidleitung (328) des stromabwärtigen Wärmetauschers (322) über die Fluidleitung (128) des stromaufwärtigen Wärmetauschers (122) fluidisch mit der Wasserstoffquelle (124) verbunden ist;
der Brenner (108) über eine Wasserstoffleitung (139), die teilweise durch die Fluidleitung (128, 328) des stromaufwärtigen und stromabwärtigen Wärmetauschers (122, 322) und durch eine Pumpe (133), die zum Bewegen von Wasserstoff (119) von der Wasserstoffquelle (124) zu dem Brenner (108) betrieben werden kann, definiert ist, fluidisch mit der Wasserstoffquelle (124) verbunden ist; und
die Wasserstoffleitung (139) an einer Stelle in der Wasserstoffleitung (139), die sich fluidisch stromabwärts der Fluidleitung (128, 328) des stromaufwärtigen und stromabwärtigen Wärmetauschers (122, 322) befindet, teilweise durch einen Speicher für gasförmigen Wasserstoff (156) definiert ist.

2. Gasturbinentriebwerk nach Anspruch 1, umfassend einen Kompressorabschnitt (102), der fluidisch mit dem primären Lufteinlass (112) verbunden ist und eine Vielzahl von Kompressorstufen (140, 142) aufweist, und einen Turbinenabschnitt, der fluidisch mit dem Auslass (118) des Brenners (108) verbunden ist und zum Antreiben des Kompressorabschnitts (102) mit dem Kompressorabschnitt (102) wirkverbunden ist, wobei der Turbinenabschnitt eine Vielzahl von Turbinenstufen aufweist und wobei:
der Kompressor (104) eine Kompressorstufe der Vielzahl von Kompressorstufen (140, 142) ist,
die Turbine (116) eine Turbinenstufe der Vielzahl von Turbinenstufen ist und
der Lufteinlass (374) der Turbinenkühlluftleitung (372) sich fluidisch stromabwärts von mindestens einer Kompressorstufe der Vielzahl von Kompressorstufen (140, 142) befindet.

3. Triebwerk nach Anspruch 2, wobei sich der Lufteinlass (374) der Turbinenkühlluftleitung (372) fluidisch stromabwärts aller Kompressorstufen (140, 142) der Vielzahl von Kompressorstufen (140, 142) befindet.

4. Triebwerk nach Anspruch 2 oder 3, wobei sich der Luftauslass (376) des Turbinenkühlluftpfads (372) fluidisch stromaufwärts aller Turbinenstufen der Vielzahl von Turbinenstufen befindet.

5. Triebwerk nach einem der vorhergehenden Ansprüche, wobei:
die Wasserstoffquelle (124) eine Quelle von flüssigem Wasserstoff (119) ist, die zum Bereitstellen eines Vorrats von flüssigem Wasserstoff (119) an der Flüssigkeitsleitung (128) des stromaufwärtigen Wärmetauschers (122) betrieben werden kann; und die Pumpe (133) eine Pumpe für flüssigen Wasserstoff ist, die an einer Stelle, die sich fluidisch stromaufwärts der Flüssigkeitsleitung (128) des stromaufwärtigen Wärmetauschers (122) befindet, in der Wasserstoffleitung (139) angeordnet ist.

6. Triebwerk nach Anspruch 5, wobei der stromaufwärtige und stromabwärtige Wärmetauscher (122, 322) und die Pumpe für flüssigen Wasserstoff derart bemessen sind, dass sie einen Großteil des Vorrats von flüssigem Wasserstoff (119) in einen Vorrat von gasförmigem Wasserstoff (121) umwandeln, oder wobei der stromaufwärtige und stromabwärtige Wärmetauscher (122, 322) und die Pumpe für flüssigen Wasserstoff derart bemessen sind, dass sie 90 %-100 % des Vorrats von flüssigem Wasserstoff (119), bezogen auf das Volumen, in einen Vorrat von gasförmigem Wasserstoff (121) umwandeln.

7. Triebwerk nach einem der vorhergehenden Ansprüche, wobei die Wasserstoffleitung (139) an einer Stelle in der Wasserstoffleitung (139), die sich fluidisch stromabwärts der Strömungsleitung (128, 328) des stromaufwärtigen und stromabwärtigen Wärmetauschers (122, 322) befindet, teilweise durch eine Expansionsturbine (134) definiert ist.

8. Triebwerk nach Anspruch 7, wobei die Expansionsturbine (134) zum Antreiben einer drehbaren Komponente (120, 148, 151) mit der drehbaren Komponente (120, 148, 151) des Gasturbinentriebwerks (300) wirkverbunden ist.

9. Triebwerk nach Anspruch 8, wobei die drehbare Komponente eine der Folgenden ist: eine Ausgangswelle (120, 151), ein Untersetzungsgetriebe (148) oder ein Nebengetriebe (148).

10. Triebwerk nach Anspruch 8 oder 9, wobei das Gasturbinentriebwerk (300) ein Getriebe (148) umfasst, das eine Ausgangswelle (151) aufweist, wobei eine drehbare Komponente (146) der Expansionsturbine (134) zum Antreiben der Ausgangswelle (151) parallel mit dem Turbinenabschnitt mit der Ausgangswelle (151) wirkverbunden ist, wobei das Getriebe (148) mit einer von dem Turbinenabschnitt angetriebenen Hauptwelle (120) wirkverbunden ist, wobei die Ausgangswelle (151) durch kombinierte Leistung von dem Turbinenabschnitt und der Expansionsturbine (134) angetrieben wird.

11. Triebwerk nach einem der vorhergehenden Ansprüche, wobei sich der Speicher für gasförmigen Wasserstoff (156) fluidisch stromabwärts einer oder der Expansionsturbine (134) in der Wasserstoffleitung (139) befindet.

12. Verfahren zum Betreiben des Triebwerks (300) nach Anspruch 1 in einem Flugzeug (1), umfassend:
Erwärmen eines Stroms von gasförmigem Wasserstoff (121) in einem stromaufwärtigen Wärmetauscher (122) mit Kompressorabluft;
Leiten des Stroms von gasförmigem Wasserstoff (121) durch den Kompressor (104) zu dem Wärmetauscher (322) stromabwärts des stromaufwärtigen Wärmetauschers (122);
Extrahieren von kinetischer Energie aus dem Strom von gasförmigem Wasserstoff (121) aus dem stromabwärtigen Wärmetauscher (322) zum Drehen einer drehbaren Komponente (120, 148, 151) des Flugzeugs (1); und
Verbrennen des Stroms von gasförmigem Wasserstoff (121) mit der Kompressorabluft in dem Brenner (108) des Gasturbinentriebwerks (300) des Flugzeugs (1) nach dem Extrahieren; und
Kühlen der Turbine (116) des Gasturbinentriebwerks (300) mit Luft aus dem stromabwärtigen Wärmetauscher (322).

13. Verfahren nach Anspruch 12, ferner umfassend:
Expandieren eines Stroms von flüssigem Wasserstoff (119) zu einem Strom von gasförmigem Wasserstoff (121) in dem stromaufwärtigen Wärmetauschers (122) stromaufwärts des stromabwärtigen Wärmetauschers (322) relativ zu dem Wasserstoffstrom;
Komprimieren von gekühlter Luft aus dem stromaufwärtigen Wärmetauscher (122);
wobei das Expandieren des flüssigen Wasserstoffs (119) zu gasförmigem Wasserstoff (121) Kühlen der komprimierten Luft aus einer ersten Kompressorstufe (140) beinhaltet; und
Versorgen des stromabwärtigen Wärmetauschers (322) mit Wärme mit komprimierter Luft von einer zweiten Kompressorstufe (142).

14. Verfahren nach Anspruch 12 oder 13, ferner umfassend Erzeugen von einem oder beidem von: Schub und elektrischer Leistung unter Verwendung von Drehung der drehbaren Komponente (120, 148, 151).

## Revendications

1. Moteur à turbine à gaz (300), comprenant :
un trajet de gaz primaire (106) comportant, en communication fluidique en série : une entrée d'air primaire (112), un compresseur (104) relié fluidiquement à l'entrée d'air primaire (112), une chambre de combustion (108) reliée fluidiquement à une sortie (114) du compresseur (104), et une turbine (116) reliée fluidiquement à une sortie (118) de la chambre de combustion (108), la turbine (116) étant reliée fonctionnellement au compresseur (104) pour entraîner le compresseur (104) ; et
un conduit d'air de refroidissement de turbine (372) se prolongeant à partir d'une entrée d'air (374) du conduit d'air de refroidissement de turbine (372) à une sortie d'air (376) du conduit d'air de refroidissement de turbine (372),
l'entrée d'air en amont (374) reliée en communication fluidique au trajet de gaz primaire (106) à un emplacement en aval du compresseur (104) et en amont d'une chambre de combustion de la chambre de combustion (108),
la sortie d'air (376) reliée à la turbine (116) pour le refroidissement de la turbine (116) à l'aide de l'air provenant du compresseur (104) transporté à travers le trajet d'air de refroidissement de turbine (372) ; et
dans lequel le conduit d'air de refroidissement de turbine (372) est défini en partie par un conduit d'air (326) d'un échangeur de chaleur (322), l'échangeur de chaleur (322) comportant un conduit de fluide (328) en isolation fluidique à partir du conduit d'air (326) et en communication thermique avec le conduit d'air (326), le conduit de fluide (328) se prolongeant à partir d'une entrée d'hydrogène (130) du conduit de fluide (328) à une sortie d'hydrogène (338) du conduit de fluide (328), l'entrée d'hydrogène (130) étant reliée fluidiquement à une source d'hydrogène (124), la sortie d'hydrogène (338) étant reliée fluidiquement à la chambre de combustion (108),
**caractérisé en ce que** :
l'échangeur de chaleur (322) est un échangeur de chaleur en aval (322) et le trajet de gaz primaire (106) est défini en partie par un conduit d'air (126) d'un échangeur de chaleur en amont (122) à un emplacement dans le trajet de gaz primaire (106) qui se trouve entre des étages de compresseur adjacents de la pluralité d'étages de compresseur (140, 142), l'échangeur de chaleur en amont (122) comportant un conduit de fluide (128) en isolation fluidique à partir du conduit d'air (126) de l'échangeur de chaleur en amont (122) et en communication thermique avec le conduit d'air (126) de l'échangeur de chaleur en amont (122) ;
le conduit de fluide (328) de l'échangeur de chaleur en aval (322) est relié fluidiquement à la source d'hydrogène (124) par le biais du conduit de fluide (128) de l'échangeur de chaleur en amont (122) ;
la chambre de combustion (108) est reliée fluidiquement à la source d'hydrogène (124) par le biais d'un conduit d'hydrogène (139) défini en partie par les conduits de fluide (128, 328) des échangeurs de chaleur en amont et en aval (122, 322) et par une pompe (133) pouvant servir à déplacer l'hydrogène (119) de la source d'hydrogène (124) à la chambre de combustion (108) ; et
le conduit d'hydrogène (139) est défini en partie par un accumulateur d'hydrogène gazeux (156) à un emplacement dans le conduit d'hydrogène (139) qui est fluidiquement en aval des conduits de fluide (128, 328) des échangeurs de chaleur en amont et en aval (122, 322).

2. Moteur à turbine à gaz selon la revendication 1, comprenant une section de compresseur (102) reliée fluidiquement à l'entrée d'air primaire (112) et comportant une pluralité d'étages de compresseur (140, 142), et une section de turbine reliée fluidiquement à la sortie (118) de la chambre de combustion (108) et reliée fonctionnellement à la section de compresseur (102) pour entraîner la section de compresseur (102), la section de turbine comportant une pluralité d'étages de turbine, et dans lequel :
le compresseur (104) est un étage de compresseur de la pluralité d'étages de compresseur (140, 142),
la turbine (116) est un étage de turbine de la pluralité d'étages de turbine, et
l'entrée d'air (374) du conduit d'air de refroidissement de turbine (372) est fluidiquement en aval d'au moins un étage de compresseur de la pluralité d'étages de compresseur (140, 142).

3. Moteur selon la revendication 2, dans lequel l'entrée d'air (374) du conduit d'air de refroidissement de turbine (372) est fluidiquement en aval de tous les étages de compresseur (140, 142) de la pluralité d'étages de compresseur (140, 142).

4. Moteur selon la revendication 2 ou 3, dans lequel la sortie d'air (376) du trajet d'air de refroidissement de turbine (372) est fluidiquement en amont de tous les étages de turbine de la pluralité d'étages de turbine.

5. Moteur selon une quelconque revendication précédente, dans lequel :
la source d'hydrogène (124) est une source d'hydrogène liquide (119) pouvant fonctionner pour fournir une alimentation en hydrogène liquide (119) au conduit de fluide (128) de l'échangeur de chaleur en amont (122) ; et
la pompe (133) est une pompe à hydrogène liquide disposée dans le conduit d'hydrogène (139) à un emplacement qui est fluidiquement en amont du conduit de fluide (128) de l'échangeur de chaleur en amont (122).

6. Moteur selon la revendication 5, dans lequel les échangeurs de chaleur en amont et en aval (122, 322) et la pompe à hydrogène liquide sont dimensionnés pour convertir une majorité de l'alimentation en hydrogène liquide (119) en une alimentation en hydrogène gazeux (121), ou dans lequel les échangeurs de chaleur en amont et en aval (122, 322) et la pompe à hydrogène liquide sont dimensionnés pour convertir 90% à 100% de l'alimentation en hydrogène liquide (119) en une alimentation en hydrogène gazeux (121), en volume.

7. Moteur selon une quelconque revendication précédente, dans lequel le conduit d'hydrogène (139) est défini en partie par une turbine de détente (134) à un emplacement dans le conduit d'hydrogène (139) qui est fluidiquement en aval des conduits de fluide (128, 328) des échangeurs de chaleur en amont et en aval (122, 322).

8. Moteur selon la revendication 7, dans lequel la turbine de détente (134) est reliée fonctionnellement à un composant rotatif (120, 148, 151) du moteur à turbine à gaz (300) pour entraîner le composant rotatif (120, 148, 151).

9. Moteur selon la revendication 8, dans lequel le composant rotatif est l'un : d'un arbre de sortie (120, 151), d'une boîte de vitesses de réduction (148) et d'une boîte de vitesses d'accessoires (148).

10. Moteur selon la revendication 8 ou 9, dans lequel le moteur à turbine à gaz (300) comprend une boîte de vitesses (148) ayant un arbre de sortie (151), un composant rotatif (146) de la turbine de détente (134) relié fonctionnellement à l'arbre de sortie (151) pour entraîner l'arbre de sortie (151) en parallèle avec la section de turbine, dans lequel la boîte de vitesses (148) est reliée fonctionnellement à un arbre principal (120) entraîné par la section de turbine, l'arbre de sortie (151) étant entraîné par la puissance combinée provenant de la section de turbine et de la turbine de détente (134).

11. Moteur selon une quelconque revendication précédente, dans lequel l'accumulateur d'hydrogène gazeux (156) est fluidiquement en aval d'une ou de la turbine de détente (134) dans le conduit d'hydrogène (139).

12. Procédé de fonctionnement du moteur (300) selon la revendication 1 dans un aéronef (1), comprenant :
le chauffage d'un flux d'hydrogène gazeux (121) dans un échangeur de chaleur en amont (122) avec de l'air de refoulement de compresseur ;
le passage du flux d'hydrogène gazeux (121) à travers le compresseur (104) à l'échangeur de chaleur (322), en aval de l'échangeur de chaleur en amont (122) ;
l'extraction de l'énergie cinétique à partir du flux d'hydrogène gazeux (121) provenant de l'échangeur de chaleur en aval (322) pour faire tourner un composant rotatif (120, 148, 151) de l'aéronef (1) ; et
après l'extraction, la combustion du flux d'hydrogène gazeux (121) avec l'air de refoulement du compresseur dans la chambre de combustion (108) du moteur à turbine à gaz (300) de l'aéronef (1) ; et
le refroidissement de la turbine (116) du moteur à turbine à gaz (300) avec de l'air provenant de l'échangeur de chaleur en aval (322) .

13. Procédé selon la revendication 12, comprenant également :
la détente d'un flux d'hydrogène liquide (119) en un flux d'hydrogène gazeux (121) dans l'échangeur de chaleur en amont (122) en amont de l'échangeur de chaleur en aval (322) par rapport au flux d'hydrogène ;
la compression de l'air refroidi provenant de l'échangeur de chaleur en amont (122) ;
dans lequel la détente de l'hydrogène liquide (119) en hydrogène gazeux (121) comporte le refroidissement de l'air comprimé provenant d'un premier étage de compresseur (140) ; et
l'alimentation en chaleur de l'échangeur de chaleur en aval (322) avec de l'air comprimé provenant d'un second étage de compresseur (142).

14. Procédé selon la revendication 12 ou 13, comprenant également, à l'aide de la rotation du composant rotatif (120, 148, 151), la génération d'une ou des deux : d'une poussée et d'une énergie électrique.
